# EUROPEAN PATENT APPLICATION

(11) **EP 4 787 176 A1**
(43) Date of publication of application: **05.08.2026**
(21) Application number: 26153000.0
(22) Date of filing: 20.01.2026
(51) Int. Cl.: G06F 13/38, G06F 13/42

(54) **FRAME STRUCTURE FOR AGGREGATED DATA OVER A HALF-DUPLEX SERIAL DATA CHANNEL**

(30) Priority: 31.01.2025 US 202519043134
(71) Applicant: NXP USA, Inc., Austin, TX 78735 (US)
(72) Inventor: Daniel, Steven, 5656 AG Eindhoven (NL); Mari, Ugo, 5656 AG Eindhoven (NL); Zhang, Yuwei, 5656 AG Eindhoven (NL)
(74) Representative: Schmütz, Christian Klaus Johannes

(57) **Abstract**

A frame structure is described for aggregated data over a half-duplex serial data channel. In an example a serial link modem includes a transmit modem coupled to a serial channel and configured to send serial data through the serial channel, and an aggregator coupled to the transmit modem and configured to form a first frame type of serial data configured for data other than Universal Serial Bus (USB) data having an upstream packet and a downstream packet and a total length of less than a latency of two USB hubs, and a second frame type of serial data configured for USB data, wherein the aggregator forms the second frame type upon receiving USB data and wherein the transmit modem is configured to transmit the first frame type through the serial channel, and to transmit the second frame type through the serial channel upon completion of transmitting the first frame.

## Description

### FIELD

The present disclosure is directed in general to data communications through a half-duplex serial data channel and in particular to a frame structure for aggregated data.

### BACKGROUND

For short distance communications within a device and with nearby peripherals, it is possible to communicate data at high data rates and with low power. Close proximity allows for low error rates even with low transmit power. Internally within a device, wireless protocols are proposed for convenience and durability. Single and differential wired protocols simplify the internal construction and reduce cost. Externally, wireless communications may allow a device to be sealed against dust and moisture and still connect to peripherals. A wireless connection may be implemented with an accessory that is frequently connected and disconnected, e.g. a computer docking station, display, headset, or charger. A wireless connection may be implemented across a hinge, slip joint, or rotary joint, e.g. a folding or notebook computer, robot arm, or moveable scanner. By using high radio frequencies that correspond to short wavelengths, small antennas may be used that may easily be manufactured on a semiconductor die that includes the baseband interfaces and the radio frequency circuitry. A 60GHz contactless connection, for example, allows transceivers to be provided in many different devices for very close proximity communications.

Data communications between internal components and with peripheral devices operate using a variety of different protocols and formats. Universal Serial Bus (USB) includes low-speed, full-speed, hi-speed, embedded USB2, and other forms while other components may operate using General Purpose Input/Output (GPIO), Universal Asynchronous Receiver/Transmitter (UART), Inter-Integrated Circuit (12C), Ethernet, etc. This variety may require that each connection be served by its own interface circuit. A variety of wireless interfaces are used or being developed including Cable-Free USB, Media-Agnostic USB, and Ultra-Wideband (UWB) among others.

### SUMMARY

A frame structure is described for aggregated data over a half-duplex serial data channel. In an example a serial link modem includes a transmit modem coupled to a serial channel and configured to send serial data through the serial channel; and an aggregator coupled to the transmit modem and configured to form a first frame type of serial data configured for data other than Universal Serial Bus (USB) data having an upstream packet and a downstream packet and a total length no greater than a latency of two USB hubs, the upstream packet having a payload field configured to carry a data subfield and a table of contents subfield to identify a payload of the data subfield, and a second frame type of serial data configured for USB data, wherein the aggregator forms the second frame type upon receiving USB data; and wherein the transmit modem is configured to transmit the first frame type through the serial channel, and to transmit the second frame type through the serial channel upon completion of transmitting the first frame.

In some embodiments, the latency of two USB hubs is no greater than 176ns. In some embodiments, the second frame type has a total length no greater than a full speed USB unit interval. In some embodiments, upon receiving data other than USB data during transmitting the second frame type, the aggregator is configured to buffer the data other than USB data until after transmitting the second frame type. In some embodiments, wherein the table of contents subfield indicates the payload as a type of data or control. In some embodiments, the upstream packet comprises a synchronization field having a wait timing recovery of two bits and a data recovery of eight bits. In some embodiments, the downstream packet comprises a synchronization field and a payload field configured to carry a data subfield and a table of contents subfield to identify a payload of the data subfield.

In some embodiments, the second frame type is configured for full speed USB data and data other than USB data having an upstream packet and a downstream packet, the aggregator is configured to form a third frame type configured for high speed USB data and data other than USB data having a first part having an upstream packet and a downstream packet and a total length no greater than the latency of the two USB hubs and a second part having at least one packet to carry high speed USB data, the second part having a total length no greater than the latency of the two USB hubs, and the transmit modem is configured to transmit the third frame type through the serial channel.

In some embodiments, the second part at least one packet carries a number of bits of high speed USB data corresponding approximately to the total length of the second part at a high speed USB data rate. In some embodiments, the data rate of the second part at least one packet corresponds to a high speed USB data rate. In some embodiments, the second part at least one packet has a high speed data field with a capacity corresponding to 480Mbps as the third frame type is transmitted through the serial channel.

In some embodiments, the second part of the third frame type comprises two high speed USB fields, each associated with an error correction field. In some embodiments, the two high speed USB fields each carry transmit data. In some embodiments, the third frame type second part comprises an error correction code field configured to correct errors of the high speed USB data. In some embodiments, the latency of two USB hubs is no greater than 176ns.

In an example, a method includes sending a first frame type by a transmit modem coupled to a serial channel, the first frame type configured for data other than Universal Serial Bus (USB) data having an upstream packet and a downstream packet and a total length no greater than a latency of two USB hubs, the upstream packet having a payload field configured to carry a data subfield and a table of contents subfield to identify a payload of the data subfield, and sending a second frame type by the transmit modem in response to receiving USB data, the second frame type configured for USB data.

In some embodiments, the latency of two USB hubs is at least 82 unit intervals of the serial channel and wherein the second frame type has a total length no greater than the latency of the two USB hubs. In some embodiments, the table of contents subfield indicates the payload as a type of data or control and wherein the upstream packet comprises a synchronization field having a wait timing recovery of two bits and a data recovery of eight bits. In some embodiments, the downstream packet comprises a synchronization field and a payload field configured to carry a data subfield and a table of contents subfield to identify a payload of the data subfield.

Some embodiments include sending a third frame type by the transmit modem, the third frame type configured for high speed USB data and data other than USB data having a first part having an upstream packet and a downstream packet and a total length no greater than the latency of the two USB hubs and a second part having at least one packet to carry high speed USB data, the second part having a total length no greater than the latency of the two USB hubs.

In an example, a data frame structure includes a first frame type configured for data other than Universal Serial Bus (USB) data having an upstream packet and a downstream packet and a total length no greater than a latency of two USB hubs, the upstream packet having a payload field configured to carry a data subfield and a table of contents subfield to identify a payload of the data subfield, and a second frame type configured for USB data in response to receiving USB data, the second frame type having a total length no greater than a latency of two USB hubs.

Some embodiments include a third frame type configured for high speed USB data and data other than USB data having a first part having an upstream packet and a downstream packet and a total length no greater than the latency of the two USB hubs and a second part having at least one packet to carry high speed USB data, the second part having a total length no greater than the latency of the two USB hubs.

In an example, s serial link modem includes a transmit modem coupled to a serial channel to send serial data, wherein the serial channel has a data rate at least twice a data rate of high speed USB, and an aggregator to form a high speed data frame type having a first part having an upstream packet and a downstream packet to carry data other than USB data and a second part having at least one packet to carry high speed USB data, wherein the frame type carries a number of bits of high speed USB data in the second part corresponding approximately to the data rate of high speed USB, wherein the transmit modem is configured to transmit the high speed data frame type through the serial channel.

In some embodiments, the high speed data frame type has a length of 160 unit elements of which the second part includes 80 unit elements of data. In some embodiments, the serial channel has a data rate configured to transmit 6 megaframes per second. In some embodiments, the second part carries error correction and the error correction reduces the number of bits of high speed USB data in the second part to correspond approximately to the data rate of high speed USB.

In some embodiments, the second part has two packets to carry high speed USB data, each packet carrying high speed USB data and each packet carrying error correction. In some embodiments, the two high speed USB fields each carry transmit data. In some embodiments, the second part at least one packet has a high speed data field with a capacity corresponding to 480Mbps as the third frame type is transmitted through the serial channel. In some embodiments, the second part has a total length of the latency of two USB hubs.

In some embodiments, the latency of two USB hubs is no greater than 176ns. In some embodiments, the first part upstream packet comprises a synchronization subfield, a table of contents subfield and a data subfield, wherein the table of contents subfield is configured to identify data of the data subfield. In some embodiments, the second part is between the upstream packet and the downstream packet.

Other aspects in accordance with the invention will become apparent from the following detailed description, taken in conjunction with the accompanying drawings, illustrated by way of example of the principles of the invention.

### BRIEF DESCRIPTION OF THE DRAWINGS

Fig. 1 is a diagram of device-to-device communication in an electronics system in accordance with embodiments of the present disclosure.
Fig. 2 is a diagram of a serial link modem 200 suitable for use in the examples of Fig. 1, in accordance with embodiments of the present disclosure.
Fig. 3 is a diagram of a frame type of serial data suitable for control and data other than USB data in accordance with embodiments of the present disclosure.
Fig. 4 is a timing diagram of a sequence of frames of Fig. 3 that are duty-cycled to reduce power consumption, in accordance with embodiments of the present disclosure.
Fig. 5 is a diagram of a frame type suitable for control and non-HS USB data, i.e., Low Speed (LS) and Full Speed (FS) USB data may also be included in the frame. in accordance with embodiments of the present disclosure.
Fig. 6 is a diagram of an alternate frame type suitable for control and non-HS USB data, i.e., Low Speed (LS) and Full Speed (FS) USB data may also be included in the frame, in accordance with embodiments of the present disclosure.
Fig. 7 is a diagram of a frame type suitable for control and data types other than USB types and also for HS USB data using a dedicated HS eUSB slot in accordance with embodiments of the present disclosure.
Fig. 8 is a diagram of a short frame type that is an optional frame variation to the frame type of Fig. 7 in accordance with embodiments of the present disclosure.
Fig. 9 is an alternate timing diagram of a sequence of frames that are duty-cycled to correspond to traffic demands in accordance with embodiments of the present disclosure.
Fig. 10 is a diagram of an alternate frame type of serial data suitable for control and data other than USB data. in accordance with embodiments of the present disclosure.
Fig. 11 is a diagram of an alternate frame type suitable for control and non-HS USB data, i.e., Low Speed (LS) and Full Speed (FS) USB data may also be included in the frame in accordance with embodiments of the present disclosure.
Fig. 12 is a diagram of an alternate frame type suitable for control and data types other than USB types in accordance with embodiments of the present disclosure.

### DETAILED DESCRIPTION

It will be readily understood that the components of the embodiments as generally described herein and illustrated in the appended Figs. could be arranged and designed in a wide variety of different configurations. Thus, the following more detailed description of various embodiments, as represented in the figures, is not intended to limit the scope of the present disclosure but is merely representative of various embodiments. While the various aspects of the embodiments are presented in drawings, the drawings are not necessarily drawn to scale unless specifically indicated.

The present invention may be embodied in other specific forms without departing from its essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

A frame structure is described for a half-duplex serial channel that may be wired or wireless. The frame structure supports Universal Serial Bus (USB) Low-Speed (LS), Full-Speed (FS), and Hi-Speed (HS) data, control and non-USB data from multiple sources using multiple protocols using a low power, medium bit rate communication interface. The frame structure may include a protocol to support synchronization of upstream and downstream data packets and fields or subfields for the definition of packet contents, e.g., a demand driven field for LS/FS USB data, a demand driven field for HS USB data, a field for non-USB data, a field for housekeeping messages and a field for error correction, e.g. Forward Error Correction (FEC) or Cyclic Redundancy Code (CRC). The described frame structure meets protocol Quality of Service (QoS) metrics and system bandwidth requirements, works with a USB ecosystem and meets USB2 end-to-end latency constraints.

USB HS imposes constraints on port replication. The described frame structure includes multiple frame types that may directly implement aggregation and port replication of latency sensitive, isochronous and bursty data sources in addition to a USB source. The described framing may also address end-to-end latency or interoperability with a USB ecosystem. The constraints of USB limit the packet length and place additional constraints on the frame structure. The described frame types provide for sync, content description, payload and error correction/detection fields in a new way for low power, medium bit rate communication systems over a half-duplex serial channel.

The described frame types combine several low bit rate and medium bit rate interfaces to receive and transmit wired data to implement standard and custom protocols, traffic scheduling, aggregation, encryption, forward error correcting/cyclic redundancy checking and modem to implement data transfer with an ultra-low bit error rate (BER) over a half-duplex serial channel.

As described, three different frame types, one for non-USB and control, one for LS and FS USB data (with non-USB data also) and one for HS USB data (with non-USB also) satisfy the many different constraints of the half-duplex serial data channel system. This includes protocol driven latency requirements, aggregation of various protocols with their own individual constraints and system constraints. The described frame types work within the USB system timing constraints and aggregating other data along with the USB data while meeting the USB system timing constraints. One latency constraint is the desire for the end-to-end to be less than the two USB hub constraint of 176ns. This is to work within the USB constraint of a maximum of 5 hubs in a USB2 system which is limited to 7 tiers. Taking 2 of the 5 hubs allows for additional hubs in the system. In some examples, the frame types also have a packet length limitation of 83.33ns for non-USB and LS and FS USB frame types. This allows for the frame types to operate in a system in the FS USB UI of 83.33 ns and avoid violating latency, jitter and end-to-end USB2 system requirements.

The nomenclature for USB was formerly USB 1.0 for Low-Speed (LS) 1.5 Mbps, USB 1.1 for Full-Speed (FS) 12 Mbps, USB 2.0 for Hi-Speed (HS) 480 Mbps and USB 3.0 for SuperSpeed (SS) 5Gbps. The different standards, LS, FS, HS, SS, are not simply differences in speeds but also differ in other significant respects. With the release of USB 3.1 Super Speed 10 Gbps, USB 3.2 SuperSpeed 20 Gbps, and USB4 40 Gbps, the USB implementers forum suggests that LS, FS, and HS all be referred to as variations on "USB2," while the SS variations be referred to as "USB3." "USB2" is also sometimes referred to as "USB 2" and "USB 2.0" in deference to the older nomenclature. The present application is presented in the context of LS, FS, and HS variations of USB. Since the currently suggested "USB2" does not provide any distinction between LS, FS, and HS modes, for purposes of the present application, all USB interfaces, packets, formats, and specifications will be referred to simply as USB. The principles applied herein apply also to embedded USB (eUSB) which is specified for operation at LS, FS, and HS speeds. eUSB will also be referred to as USB except to mention a notable difference or to call attention to the application of the principles herein to eUSB. In some cases, the principles described herein may also apply to "USB3" and "USB4" and so these are also referred to simply as USB.

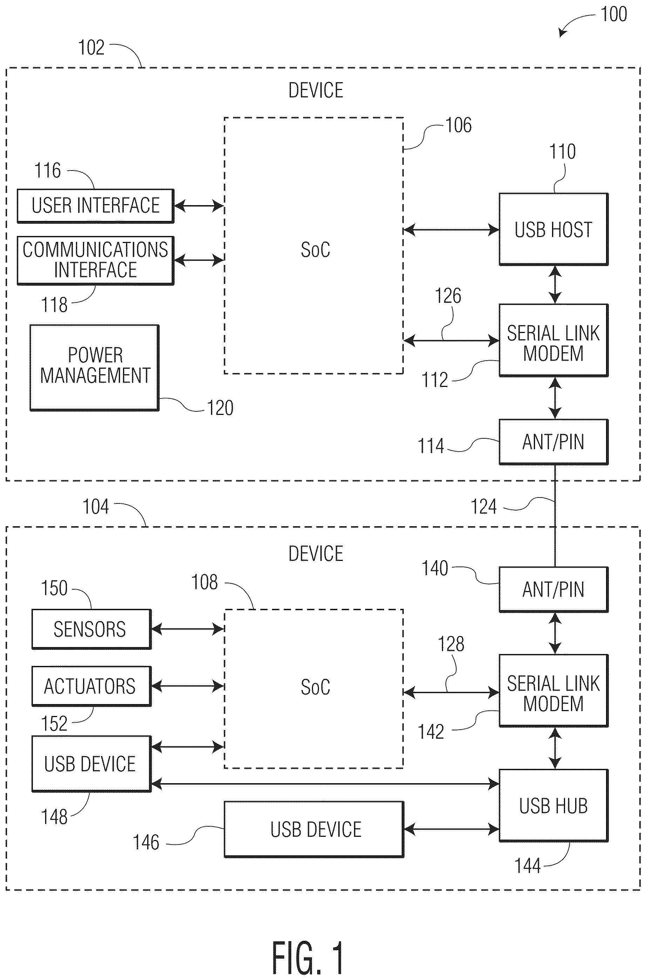

Fig. 1 is a diagram of device-to-device communication in an electronics system 100. A first device 102 has a first serial link modem 112 coupled through a serial channel 124 to a second serial link modem 142 of a second device 104. The first serial link modem 112 is coupled to a USB host 110 of the first device 102 which controls the USB communications through the serial channel 124. The second serial link modem 128 is coupled to a USB hub 144 of the second device 104. The USB host 110 and USB hub 144 are provided as examples. The serial channel 124 may be used for any allowed USB communications, i.e. between host and hub, between hub and hub, and between hub and device or function. Either of the first device 102 and the second device 104 may contain the host, hub, or device/function as appropriate to the purposes of the respective devices. In an example, a hub, instead of the USB host 110, is coupled to a device, instead of the USB hub 144, through the serial channel. A separate USB host other than the one shown then controls communications but is coupled to the hub through another USB connection between the host and the hub that is coupled to the serial channel 124.

In examples, the serial channel 124 is a half-duplex wireless serial radio channel in a 60GHz frequency range. The serial link modem 112 is coupled to a transmit and receive antenna/pin 114 that is positioned to communicate wirelessly with a corresponding transmit and receive antenna/pin 140 of the second device 104. In other words, the first device antenna/pin 114 is coupled using radio frequency communications to the second device antenna/pin 140 through the serial channel. In other examples, a wired half-duplex serial channel may be used. The first serial link modem 112 is coupled to a pin of the first antenna/pin 114 or another electrical connector instead of an antenna. The pin is coupled to a fiber, lead, trace, or wire that provides the serial channel 124 to a corresponding pin of the second device antenna/pin 140 of the second device 104 that is in addition to or instead of an antenna. While the description is presented in the context of a wireless serial channel, any of a variety of different wired or optical serial channels may be used instead, from a copper trace to a polymer microwave fiber, inter alia. In other examples a full duplex wireless or wired link in any of a variety of different frequencies may be used.

The first device 102 includes a System on a Chip (SOC) 106 which may include processing, memory, graphics, interfaces, and communications resources. The SoC 106 is coupled to or includes a user interface 116, a communications interface 118 and power management 120. The power management may include voltage regulation, power distribution, power storage and other functions. The SOC 106 is coupled to the USB host 110 which is coupled to the serial link modem 112. The USB host 110 receives data from and transmits data to the SOC and, in some examples, to other components (not shown) of the first device 102 in any of a variety of different formats. The USB host may be coupled to the user interface 116, the communications interface 118, or the power management 120 using USB through a USB host. The connection may be direct or through the SoC 106 as shown. The data is converted to be sent or received by the serial link modem 112. The serial link modem 112 operates as a transceiver to transmit and receive data through the serial channel 124. The serial link modem 112 may include packetization, modulation, amplification, etc. In some examples, the USB host 110 prepares the data for transmission through the serial link modem 112 and the serial link modem 112 amplifies and modulates the data as appropriate for the nature of the serial channel 124. The serial link modem 112 also receives demodulates and amplifies serial data through the serial channel 124 from the second device 104.

The SOC 106 and/or other components of the first device 102 also provide a variety of different multiple bit rate protocols 126 to the serial link modem 112. The serial link modem 112 applies one of the different multiple bit rate protocols 126 to the data received from or transmitted across the serial channel 124 to the serial link modem 142 of the second device 104 as determined by a higher layer processor or state machine, e.g. the SoC 106.

The second device 104 has or is connected to a first USB device 146, a second USB device 148, sensors 150, and actuators 152. These may all be directly or indirectly coupled to an SoC 108 of the second device 104. Any one or more of these devices may be incorporated into the SoC 108. The second device 104 has the second USB serial link modem 142 coupled to the second antenna/pin 140 to connect through the serial channel 124 to the serial link modem 112 of the first device 102. The USB hub 144 receives data from and transmits data to other USB components of the second device 104, e.g. the first USB device 146 and the second USB device 148, in any of a variety of different USB formats, e.g., LS, FS, HS, and eUSB. The data is forwarded to or received from the serial link modem 142 to be sent or received across the serial channel 124 to the serial link modem 112. The SoC 108 and/or other components of the second device 104 provide a second variety of different multiple bit rate protocols 142 to the second serial modem 142. The second serial modem 142 applies one of the different multiple bit rate protocols 128 to the data received from or transmitted across the serial channel 124 as determined by a higher layer processor or state machine, e.g., the SoC 108.

In the configuration of Fig. 1, the USB host 110 is directly connected to the USB hub 144 through respective serial link modems 112, 142. In examples, the same latency, jitter, delay, speed, error rate, and other requirements apply to the serial link modems 112, 142 and to the serial channel 124 connecting the serial link modems 112, 142 as apply to the expected wired connection between a USB host and a USB hub. Accordingly, the serial channel interface of the transmit and receive modems and the structures of the frame types are configured to meet these requirements. In addition, there may be other protocols that use the same serial channel 124 when a USB connection is not active. The serial link may be configured to carry the other protocols even when the USB connection is active. As explained below, the data is aggregated and sent over the serial link faster than the wired USB and other protocols. This allows the serial link to keep up with the aggregated bandwidth and overhead that is sent through the serial link to support multiple devices in the system.

Only a few components of the first device 102 and the second device 104 are shown. Both the first device 102 and the second device 104 may include more or fewer additional components including sensors, interfaces, processors, data storage, and power components. The USB devices may be incorporated into the SoC or the device or may be external as peripheral or related devices. The configuration of the first device and the second device are provided as examples for context. There may also be additional connected devices. While the first device 102 shows a USB host 110 coupled to the serial link modem 112 and the second device 104 shows a USB hub 144 coupled to the second serial link modem 142, either one or both may use any suitable combination of hosts, hubs, or USB devices.

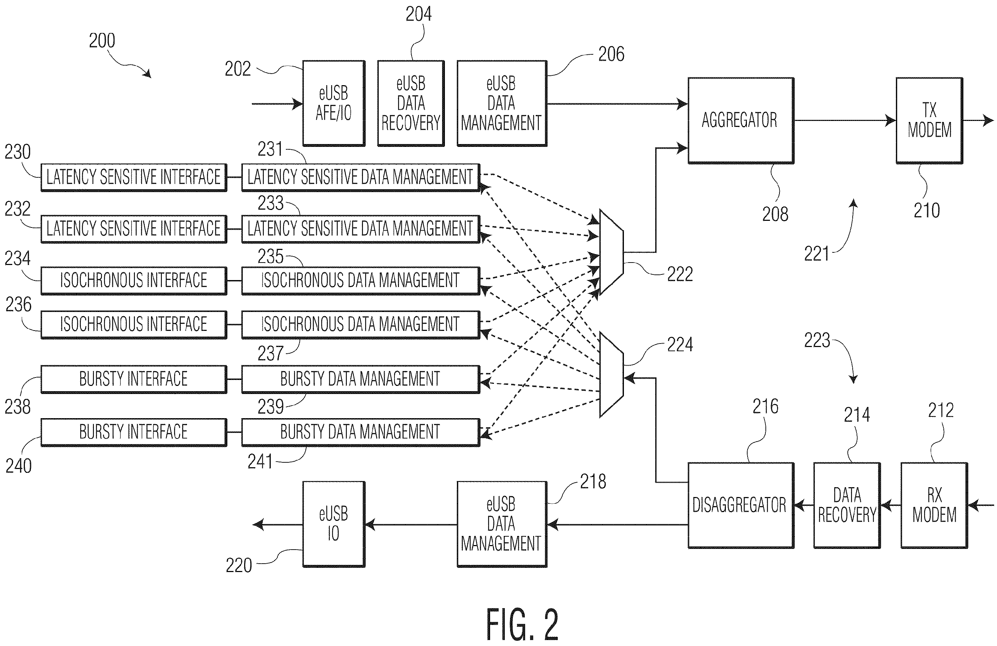

Fig. 2 is a diagram of a serial link modem 200 suitable for use in the examples of Fig. 1. A transmit side 221 of the modem 200 includes an embedded USB (eUSB) Active Front End (AFE)/Input Output (IO) interface 202. The eUSB AFE/IO interface 202 receives data from other components of a device (not shown) for transmission to another component of the device or a peripheral device. This is coupled to eUSB data recovery 204 of the modem 200. The eUSB data recovery 204 extracts the data from an incoming eUSB serial stream. In an example, the eUSB data recovery oversamples the incoming eUSB serial stream and uses edge detection to determine timing and bit value of the incoming stream. In another example, clock recovery is used to determine bit values. The eUSB data recovery 204 is coupled to eUSB data management 206.

The eUSB data management 206 receives the data from the eUSB data recovery and converts it to a serial bit stream suitable for simple transmission through a transmit modem 210. The transmit modem 210 is coupled to a serial channel, whether wired or wireless, and configured to send serial data through the serial channel. USB, in LS, FS and HS modes, uses voltages and four different states of a differential wire pair to signal more than just "1" or "0" at any particular time. USB HS also uses ""J"s" at the beginnings of HS packets and bit stuffing at the ends of HS packets. The eUSB data management 206 parses all of these aspects of USB differential signaling and converts them to a simple serial stream. The eUSB data management may also attach preambles or provide signals to the aggregator to identify the original USB type for the converted data as LS, FS, HS, etc.

The eUSB data management 206 provides data to an aggregator 208. The aggregator 208 aggregates all of the received data, optionally encrypts the aggregated data, optionally generates error correction, e.g. FEC or CRC, generates packets, and performs traffic scheduling to schedule the packets for transmission by the coupled transmit modem 210. The aggregator 208 sends the data packets to the transmit modem 210 that is coupled to a wireless or wired communication channel, e.g., a half-duplex serial channel. The transmit modem 210 sends the packets in one or more different frame types as described in more detail below.

A receive side 223 of the modem 200 includes a receive modem 212 that is coupled to the wireless or wired communication link to receive packets in the frame structure. The receive modem 212 is coupled to data recovery 214. The data recovery 214 is coupled to a disaggregator 216. The disaggregator 216 decrypts the packets, if encrypted, applies any appropriate error correction, if included, and transmits the packets to eUSB data management 218 or to other data management through a demultiplexer 224. The eUSB data management 218 is coupled to the disaggregator to receive the simple serial stream of bits from data recovery 214 and convert it to appropriate USB signals for LS, FS, or HS mode. USB can be differential for high-speed but also single ended as single ended 0 and single ended 1 are also used for signaling. As described below, a preamble or sync field may be attached to each data packet to identify the protocol for the payload of the packet. The eUSB data management may use this information to properly convert the serial stream. The eUSB data management is coupled to a receive eUSB AFE/IO interface 220. The receive eUSB AFE/IO provides the received data to the other components (not shown) of the device. The receive eUSB AFE/IO interface 220 and the transmit eUSB AFE/IO interface 202 may be the same component and share USB connections to other components. The receive eUSB data management 218 and the transmit eUSB data management 206 may also be the same component. The transmit side 221 and the receive side 223 are shown separately to better illustrate the principles of operation.

On the transmit side 221, the aggregator 208 is also coupled to a transmit multiplexer 222 that provides additional data to be aggregated with the eUSB data. On the receive side 223, the disaggregator 216 is coupled to a demultiplexer 224 and provides additional data to the demultiplexer 224 other than eUSB data.

The transmit multiplexer 222 couples multiple data streams from the modem's ports to the aggregator 208. The data streams may include latency sensitive data through latency sensitive interfaces 230, 232 coupled to respective latency sensitive data management 231, 233, isochronous interfaces 234, 236 coupled to isochronous data management 235, 237, and bursty protocols through bursty interfaces 238, 240 coupled to bursty data management 239, 241, which can include single wire debug, GPIO, I2C, housekeeping, UART, and other data from other protocols and custom protocols. The interfaces 230, 232, 234, 236, 238, 240 are provided as examples. There may be more or fewer interfaces to suit a particular implementation. The data management 231, 233, 235, 237, 239, 241 performs a conversion of the received data from its received format to serial streams that are provided to the aggregator 208. In examples, the transmit multiplexer 222 is controlled by the aggregator 208 to provide the serial streams as needed to fill frames at the aggregator 208. The conversion may include generating information or a preamble to identify the source and destination for the converted data.

Similarly, received and disaggregated data from the demultiplexer 224 is directed to the appropriate data management 231, 233, 235, 237, 239, 241 that performs a conversion of the received data from serial streams to an appropriate format for the intended interface. From the data management the data is provided to the respective interfaces 232, 234, 236, 238, 240 to be provided to the appropriate data sink of the system.

All of this data may be aggregated by the aggregator 208. The aggregator 208 is coupled to the transmit modem 210 to provide serial data that has been aggregated from the aggregator to the transmit modem. The transmit modem 210 is coupled to the serial channel to send the serial data from the aggregator through the serial channel. The serial data is transferred over the half-duplex serial channel for distribution through a disaggregator and receive multiplexer of a paired modem's ports meeting end-to-end latency requirements and enabling interoperability within a USB ecosystem. Any one of LS, FS or HS modes can be active at any one time. There is then a transition to another of LS, FS, or HS modes. Other non-USB protocols can be active while any one of the USB protocols, LS, FS, or HS, is active.

Using the transmit multiplexer 222 and receive demultiplexer 224, the modem 200 may directly implement aggregation and port replication for latency sensitive, isochronous and bursty data sources in addition to the USB source coupled to the eUSB AFE/IO interface 202. Non-USB data and control frames may be supported. The transmit multiplexer 222 allows for LS and FS USB data to be aggregated with non-USB data and control while still meeting USB requirements, e.g., jitter, and high-speed capability negotiation. HS USB has further requirements of end-to-end latency, start-of-packet sync, end of packet bit-stuffing and bidirectional flow of HS traffic without collisions. USB also has data rate requirements of 1.5 Mbps for LS, 12 Mbps for FS and 480 Mbps for HS. These may all be supported using the illustrated fine-grained aggregation of multiple data streams of different protocols.

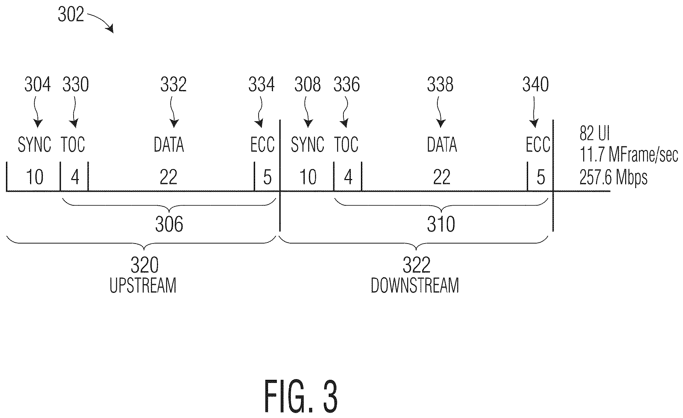

Fig. 3 is a diagram of a frame type of serial data suitable for control and data other than USB data. Considering the example of Fig. 2, the data comes to the aggregator 208 from the interfaces 230, 232, 234, 236, 238, 240 but not from the eUSB AFE/IO interface 202. The frame type 302 includes an upstream packet 320 and a downstream packet 322 for upstream and downstream data transfers, respectively, in a single frame. In this example the frame type 302 has 82 radio frequency (RF) unit intervals (UI) equally split between upstream and downstream. With a channel baud rate of 960 Mbps, there are up to 11.7 megaframes per second so the frame type could support up to a 257.6 Mbps data transfer in both directions for an aggregate 515.2 Mbps data transfer capacity.

The upstream and downstream fields of the frame type have the same structure. The upstream packet 320 has an upstream synchronization (sync) field 304 and an upstream payload field 306. The downstream packet similarly has a downstream sync field 308 and a downstream payload field 310.

In some examples, the sync field 304, 308 has a first subfield, e.g., two bits, for turnaround time from downstream to upstream and vice versa. The sync field 304, 308 has a second subfield, e.g., eight bits, for training, i.e. to enable data recovery and to mark the end of the sync field 304, 308. In one example, the sync field 304, 308 of the frame type 302 is composed of 10 bits, e.g. 0b0010101011, where the initial two bits 0b00 are for turnaround time of the modem and the final 8 bits, e.g. 0x10101011, are to enable data recovery and mark the end of the sync field.

The payload fields 306, 310 have three subfields 330, 332, 334 for the upstream packet 320 and three subfields 336, 338, 340 for the downstream packet 322, both indicated as having 4, 22, and 5 bits, respectively. A Table of Contents subfield 330, 336 has 4 bits, a data subfield 332, 338 has 22 bits of data, which is the payload of the packet, and an error correction subfield 334, 340 has 5 bits. The Table of Contents subfield 330, 336 indicates the nature of the data, e.g., GPIO, single-wire debug, UART, I2C, housekeeping data, custom and other protocols, etc. The data carries the control, command, management, or values of the field and the error correction subfield 334, 340 is used to check or correct for error in the data.

In some examples, the error correction subfield 334, 340 has 5 bits of Forward Error Correction (FEC) coding. The FEC coding is included to improve the BER. In some examples, Hamming code is used as the FEC based on decoding complexity and latency trade-off considerations. In another example, Cyclic Redundancy Coding (CRC) may be used as the error correction provided that there is available bandwidth. The error correction may be selected based on the amount of correction desired, the required processing to correct errors, the latency to correct errors, and the available bandwidth. Higher data rates, e.g., 1080 and 1100 Mbps, through the serial channel may allow for more complex and effective error correction.

In some examples, there is no error correction subfield and the data subfield 332, 338 may be expanded to 27 bits to fill the deleted error correction subfield 334, 340.

As shown, the packet length is limited to 41 UI and there are two packets; an upstream packet and a downstream packet. This short packet length satisfies end-to-end latency and interoperability constraints of a USB ecosystem and particularly for FS USB. As described in further detail below, there are other frame types that allow for LS, FS, and HS USB data to be carried. The packets of Fig. 3 do not carry USB data and so the frame type of Fig. 3 introduces a delay of at least 82 UI before USB data can be sent again. At 960Mbps, 82 UI requires 85.4ns to complete. The length of the frame type 302 is limited in order to limit the latency of the USB data. The length of the frame structure is no greater than a full speed USB unit interval. In some examples, there is no mechanism to stop the upstream and downstream packet in the middle of transmission in order to send a higher priority packet.

As shown in Fig. 1, the serial channel 124 provides a connection between a USB host 110 and a USB hub 144. The same type of serial link modems and antenna or pins may alternatively be used to connect two hubs or a hub and a device as an addition to the electronics system 100 or as a part of a different system. To support such USB communications, there is a limit to the latency from one node, e.g. a host or hub, to another node, e.g. a hub or device, that is equivalent to the delay of traversing through two USB hubs. To one approximation, this delay is about 166.6ns (2 × 83.3ns) for FS USB based on a 12 Mbps data rate. Considering the physical limitations as defined in the current standards, instead of the data rates, each hub may be allotted a maximum of 75ns and a wire propagation delay of up to 26ns is permitted for a total of 176ns, a little more than the 166.6ns mentioned above. There is additional delay or propagation time for a frame type to travel from host to hub through the serial link that includes radio transmission, transmit and receive modem buffers, aggregation and disaggregation time, etc. Accordingly, the frame types may be selected to have a total length no greater than the latency of two USB hubs to provide for this additional delay. In some examples, this may be done by limiting the total length to a latency no greater than 176ns.

Considering the frame type 302, the total length is not just no greater than but also less than the latency of two USB hubs. This allows USB data to be sent through the serial channel within the latency of two USB hubs. The frame type 302 may be made even shorter subject to other constraints. As a result, upon receiving USB data, the aggregator can configure a next frame to carry the received USB data in less time than the total length of the frame type 302 that carries data other than USB data. To maintain a low USB latency with a longer frame, a mechanism would be required to interrupt the frame in order to send USB data. This requires additional overhead to send interruptions, to manage the interrupted data and to resend data that was interrupted.

In addition, the data subfield and the error correction subfield allow for a balance of data other than USB data and error correction. For Hamming codes, 5 bits of Hamming code is suitable for use with 22 bits of data. More or fewer bits of Hamming code would entail more or fewer bits of data and this would impact the total length of the frame. By maintaining 15 data bits in the data subfield of the upstream packet and the downstream packet, the latency is reduced for the transmitted data. A longer frame type may require that the data sources and sinks be reconfigured with larger buffers to first accumulate data and then to receive data that arrives faster than a sink can receive the data.

While for some applications, the frame type 302 may be adjusted to be asymmetric in data transfer between the upstream and the downstream, the small payload and the low latency may make this undesirable. By shifting some of the 20 bits in the data payload portion of the upstream payload field 306 to the data/payload portion of the downstream payload field 310, or vice versa, a special use case may be supported that has one-sided traffic. The error correction portions may also be modified accordingly. However, the possible useful configurations are limited by the need to encode the port or type of data transferred from the multiple available ports and by protocol and latency requirements.

Alternatively, for control frames as compared to the described non-USB data frames the length of the upstream packet 320 or the downstream packet 322 may be extended. Control frames are used during setup or when the USB ports are not connected or are in suspend. Latency management may often be ignored during these times.

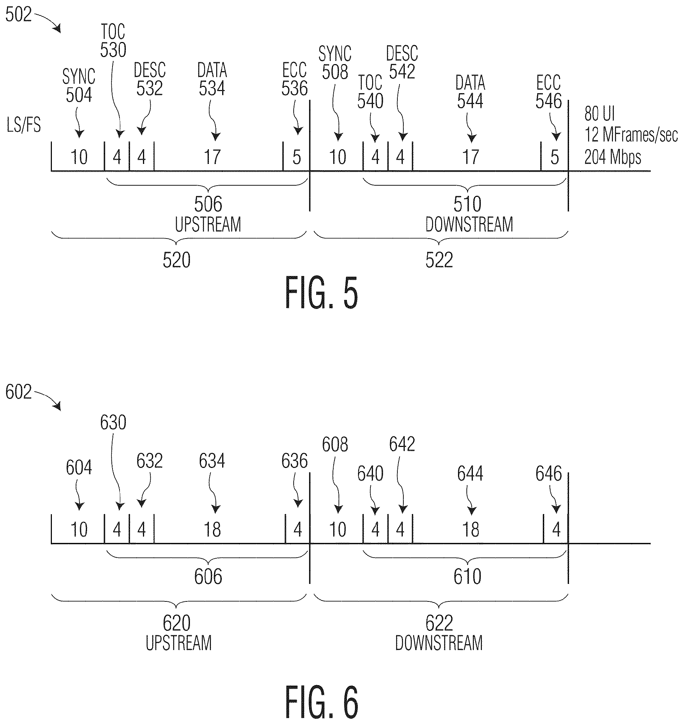

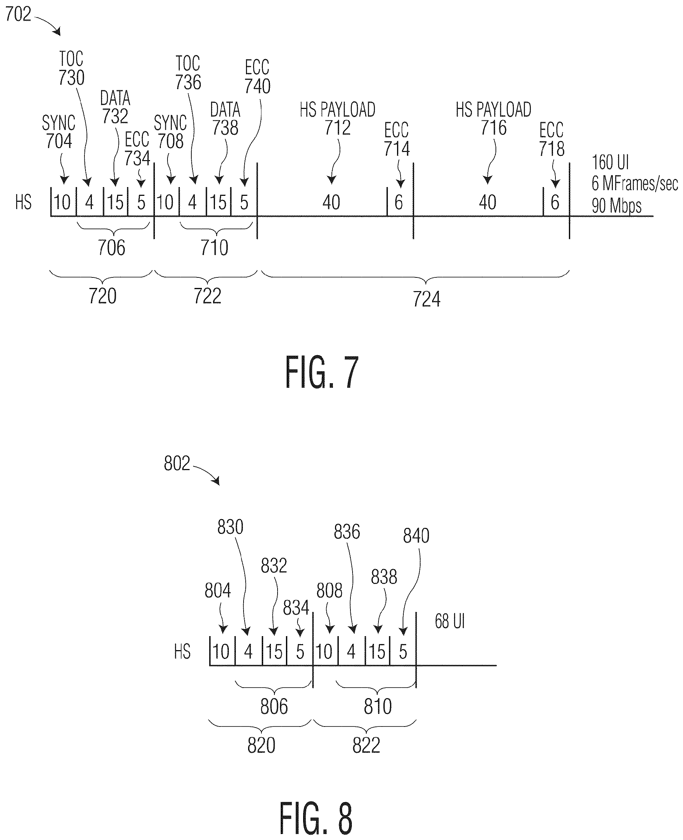

Control and non-USB data frames, such as those of Fig. 3 may be used when no USB data or no USB devices are present. As soon as VBUS is applied, indicating the start of USB data, the system may switch to the frame type of e.g., Fig. 6 or 7. The system, driven e.g., by the aggregator 208 for the transmit side 221 and the disaggregator on the receive side 223, may switch to a different frame type at an end of a current packet. In examples, the data starts with FS or LS data that may be transmitted in a frame type as shown e.g., in Fig. 6, and then may or may not then move to HS data that may be transmitted as shown e.g., in Fig. 7. If the USB host, hub, or device goes into an idle or suspend mode, or is disconnected so that USB data is no longer present, then the system may return to a frame type suitable for non-USB data packets, e.g. the frame type of Fig. 3.

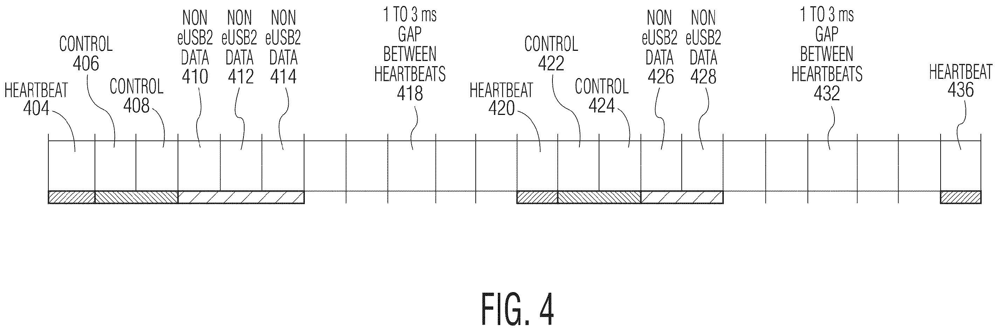

Fig. 4 is a timing diagram of a sequence of frames of Fig. 3 that are duty-cycled to reduce power consumption. The sequence of frames may be referred to as a superframe. As shown in the sequence, the data and control frames of Fig. 3 may be duty cycled to reduce power consumption when there is no data transferred in either direction. Especially in many USB applications but also in other applications, this may be done by sending a burst of frames likely after an RF tick frame, also referred to as a clock synchronization frame. The RF tick frame may schedule when the next burst could occur and then command transmitters and receivers to go to a power down state until the next scheduled RF tick.

As shown, the sequence of frames begins with a RF tick frame 404. This may be followed by one or more control frames 406, 408 and one or more data frames 410, 412, 414. The RF tick frame, as mentioned above, may provide clock synchronization using e.g., training bits or a training sequence, and then a wakeup time for the next RF tick frame indicated as a number of UI, a number of frame times, a number of milliseconds, or indicated using other units. The RF tick frame 420 may include a barker code to tune the oscillator of the receiver to that of the transmitter. A device identifier may also be included. A transmitter may determine the wakeup time based on transmit and receive queues or using any of a variety of different predictive methods. The transmitter and receiver may then enter a low power state or sleep state after the data frames 410, 412, 414 until the next RF tick 420. In the example of Fig. 4, the wait time 418 for the low power state is indicated as 1 to 3 milliseconds. The control frames may be in the format of the frame type 302 of Fig. 3, or any other suitable frame structure. The control frames 406, 408 may include acknowledgments, transmit power adjustments, encryption parameters, and other control information. The data frames may also correspond to the frame type 302 of Fig. 3, Fig. 8, or another frame.

In some examples, the last packet in the frames 414 and 428 in Fig. 4 contain information on power down. The RF Tick may be sent periodically, e.g., every 1ms, as a heartbeat. New data may come in after an RF Tick. Data frames may be sent until there is no available data to send. The transmit modem may then power down until the next RF tick time, as determined by the period, e.g., 1 ms. The RF Tick 420 may be a specialized packet to allow the receiver to recognize it and may be optimized for clock synchronization and RF Frame number. A control packet may be used after an RF Tick to implement more functions like changing the RF Tick period.

After the wait time 418, the frame sequence includes a second RF tick frame 420 of a type similar to the first RF tick frame 404. The indicated wait time may be more or less than before depending on the expected traffic. The second RF tick frame 420 is followed by two control frames 422, 424 and two data frames 426, 428. The second RF tick frame may be used also to indicate the number of control frames and data frames that follow the RF tick frame. As shown, there are three data frames 410, 412, 414 that follow the first RF tick frame 404 and two data frames 426, 428 that follow the second RF tick frame 420. A value of two, three, and other numbers for control frames and data frames may be included in the RF tick frame.

After a second wait time 432, the transmitter sends a third RF tick frame 436 which may be followed by further control frames and data frames (not shown). The sequence of frames may continue in time as the devices operate and communicate data through the half-duplex serial channel. The duty cycle of the sequence of frames may be modified with more or fewer control frames and data frames after each RF tick frame and with longer or shorter wait times between each RF tick frame.

Fig. 5 is a diagram of a frame type 502 suitable for control and non-HS USB data, i.e., Low Speed (LS) and Full Speed (FS) USB data may also be included in the frame. Considering the example of Fig. 2, the LS and FS USB data may be received at the eUSB AFE I/O interface 202, converted, and sent to the aggregator 208 which aggregates the USB data with the other data from the transmit multiplexer 222. The frame type 502 includes an upstream packet 520 and a downstream packet 522 for upstream and downstream data transfers, respectively, in a single frame type 502. In this example, the frame type 502 has 80 RF UIs equally split between upstream and downstream. With a channel baud rate of 960 Mbps, there are up to 12 megaframes per second so the frame type could support up to a 204 Mbps data transfer in both directions for an aggregate 408 Mbps data transfer capacity for LS USB, FS USB, and other traffic. In some embodiments, the data rate is increased by 12 Mbps to 420 Mbps. This allows FS USB to be included more readily, e.g., without overlapping with other nearby radios.

The upstream and downstream fields of the frame type have the same structure. The upstream packet 520 has an upstream synchronization (sync) field 504 and an upstream payload field 506. The downstream packet similarly has a downstream sync field 508 and a downstream payload field 510.

The sync field 504, 508 may have the same structure and functions as described above for the frame type 302 of Fig. 3. The payload fields 506, 510 each have four subfields indicated as 4, 4, 17, and 5 bits, respectively. A Table of Contents subfield 530, 540 has 4 bits, a USB descriptor subfield 532, 542 has a 4-bit descriptor, the data subfield 534, 544 has 17 bits of data and an error correction subfield 536, 546 has 5 bits. The Table of Contents, data, and error correction may have the same or similar structure to that described above with respect to Fig. 3. The Table of Contents may indicate whether the data in the data subfield is USB data or another type of data as in the case of the Table of Contents subfield 330, 336 of Fig. 3.

The USB descriptor subfield 532, 542, 4 bits of USB descriptor, may be used to indicate the nature of the USB communication. There may be an identifier for LS, FS, etc. The USB descriptor subfield 532, 542 may work in combination with the Table of Contents subfield 530, 540 to identify the nature of the data that is being sent and received across the serial channel. In some examples, FS and LS are identified for the data using a control packet. The Table of Contents subfield 530, 540 may then be used for the state of the USB bus. For more complex implementations, up to 12 bits or more may be used to indicate the state of the USB bus.

The USB FS, and LS protocols have specific constraints concerning latency, roundtrip delay, jitter and for signaling the USB bus state over a retimed serial channel. Using 80 UI as in the frame type 302 of Fig. 3 with a baud rate of 960 Mbps maintains a time between upstream packets of 83.3ns. This allows the frame type to keep up with the 12 Mbps rate of FS USB. This is within the latency and timing constraints for USB FS, and LS communications. In addition, the total length of the frame type 502 which includes FS USB data is no greater than the time to traverse two USB hubs, just as with the above example of the frame type 302. This allows for FS USB data to be transmitted through the serial channel upon completion of the frame type 502.

FS USB data is defined with a data rate of 12MHz or inversely as having an 83.33ns period. While the two differential lines of FS USB are used for binary signaling in many modes, for 12 Mbps, there are other modes which have additional non-binary states for the lines. The 83.33ns period corresponds to the frame length for the frame types of Fig. 5 and Fig. 6. At 960 Mbps, 80 UI are sent in 83.33ns.

Fig. 6 is a diagram of an alternate frame type 602 suitable for control and non-HS USB data, i.e., Low Speed (LS) and Full Speed (FS) USB data may also be included in the frame. In this example a 4-bit housekeeping code is also used. The frame type 602 includes an upstream packet 620 and a downstream packet 622 for upstream and downstream data transfers, respectively. The upstream packet 620 has an upstream synchronization (sync) field 604 and an upstream payload field 606. The downstream packet similarly has a downstream sync field 608 and a downstream payload field 610. The payload fields 606, 610 each have four subfields indicated as 4, 4, 18, and 4 bits, respectively. A Table of Contents subfield 630, 640 has 4 bits, a USB descriptor subfield 632, 642 has a 4-bit descriptor, the data subfield 634, 644 has 18 bits of data and an error correction subfield 636, 646 has 4 bits. Using the housekeeping code of 4 bits one more bit is available for the data subfield 634, 644. Similar types of adjustments to the number of bits in each subfield may be made to suit different types of values for the subfields of the payload field.

As with the example of Fig. 5, the frame type 602 has 80 RF UIs equally split between upstream and downstream. With a channel baud rate of 960 Mbps, there are up to 12 megaframes per second so the frame type could support up to a 204 Mbps data transfer in both directions for an aggregate 408 Mbps data transfer capacity for LS USB, FS USB, and other traffic. The 80 RF UIs in the 60 GHz serial channel have a total length of 83.33ns meeting the latency, jitter, and end-to-end requirements for a FS USB unit interval, as mentioned above.

In some examples, there is no error correction subfield and the data subfield 634, 644 may be expanded to 22 bits to fill the portion of the packet that would have been used by the now deleted error correction subfield 636, 645.

Fig. 7 is a diagram of a frame type suitable for control and data types other than USB types and also for HS USB data using a dedicated HS eUSB slot. The frame type 702 includes a first part having an upstream packet 720 and a downstream packet 722 for upstream and downstream data transfers, respectively, in a single frame. In this example the frame type 702 has 160 UI. With a channel baud rate of 960 Mbps, there are up to 7 megaframes per second so the frame type could support up to a 90 Mbps data transfer in both directions for an aggregate 180 Mbps data transfer capacity for control, and other non-USB data traffic.

The upstream packet 720 and the downstream packet 722 of the frame type have the same structure. The upstream packet 720 has an upstream synchronization (sync) field 704 and an upstream payload field 706. The downstream packet similarly has a downstream sync field 708 and a downstream payload field 710. The sync fields 704, 708 may have the same structure and functions as described above for the frame type 302 of Fig. 3. The payload field 706, 710 also has the same structure as in Fig. 3 with a Table of Contents subfield 730, 736 of 4 bits, a data subfield 732, 738 of 15 bits, and an error correction subfield 734, 740 of 5 bits. As compared to the frame type 302 of Fig. 3, the data subfield 732, 738 of the payload field 706, 710, is reduced to 15 bits for the upstream packet 720 and for the downstream packet 722.

In addition, after the downstream packet 722, the frame type 702 has a second part 724 including two HS USB packets. In some examples the second part 724 may be before the first part within the same frame type 702 or between the upstream packet 720 and the downstream packet 722 of the first part. A first packet of the second part 724 has a data field 712 of 40 bits and an error correction field 714 of 6 bits. The second packet of the second part also has a data field 716 of 40 bits and an ECC field 718 of 6 bits. The first packet and second packet may both be upstream packets or both be downstream packets.

In this way, the frame type 702 has a length of 160 UI. The first part and the second part are each 80 UI. The frame type 702 is configured for data other than HS USB data in the first part, the frame type having a first part having an upstream packet 720 and a downstream packet 722 and a total length no greater than the latency of the two USB hubs. The frame type is also configured for HS USB data in the second part 724. The frame type having at least one packet to carry high speed USB data, the second part 724 having a total length no greater than the latency of the two USB hubs or about 176ns. As shown, the frame type carries a number of bits of HS USB data in the second part 724 corresponding approximately to the data rate of HS USB.

In each of the frames, upstream refers to a packet that is being transmitted from a device to a hub or from a hub to a host. Downstream refers to a packet that is being transmitted from a host to a hub or from a host to a device. Typically, a downstream packet is sent first in a frame because the hub starts the communication with a device. Accordingly, the upstream and the downstream packets may be reversed in order in any of the frames described herein. In this example, for upstream HS USB, the HS USB part may be between the upstream packet 720 and the downstream packet 722. For downstream HS USB, the first part downstream packet 722 of the first part may be followed by the second part 724 and then the upstream packet 720 of the first part. On the other hand, if data is requested from a downstream device, then the frame type may have the downstream packet 722 of the first part, followed by the upstream packet 720 of the first part, followed by upstream HS USB. The frame type 702 allows the data through the serial channel to switch from HS USB to e.g., FS USB after the HS communication goes idle. This latency will be no longer than 176ns.

The data rate of HS USB data transferred across the serial link may be configured to approximate or closely correspond to the HS USB data rate, e.g. 480 Mbps. If data is sent too slowly through the serial link, then the excess data must be buffered as it is received before the serial link. If data is sent too quickly through the serial link, then the overrun data must be buffered at the receiver before it can be sent to the target hub or device. Buffering requires additional latency to initially fill the buffer. Underruns can lead to errors in the recovered data or to missing data. If the serial link or buffers are prone to errors of any kind, then an additional bit may be required to indicate if the received data is missing or invalid. This adds additional overhead for the serial link.

In a 960 Mbps example for the HS USB frame type 702, the serial channel is operating at twice the HS USB data rate of 480 Mbps so to maintain the HS USB data rate, half the frame type 702 allocated to the HS USB data and the other half of the frame type 702 is allocated to a non-USB UI for sync, non-USB data, LS and FS USB data and control.

In some examples, there is no error correction subfield and the data subfield 732, 738 may be expanded to 20 bits to fill the deleted third, the error correction subfield 734, 740. Also, an additional bit or bits may be used to indicate valid data receipt but this adds additional overhead for the serial channel.

Fig. 8 is a diagram of a short frame type 802 that is an optional frame variation to the frame type 702 of Fig. 7. When there is no HS data to transmit and receive, the aggregator and disaggregator may remove the second part 724 of the frame type 702. This includes the two HS USB data fields 712, 716 and associated error correction fields 714, 716. In this scenario, the frame type may appear as shown in Fig. 8, in which the payload field 806, 810 has 4+15+5 bits as in Fig. 7 or the frame type may revert to that of Fig. 3 or to that of Fig. 6. The demand driven HS data fields 712, 716 are utilized for upstream and downstream traffic. HS USB traffic may be managed by a root hub at Tier 1 to manage the USB traffic direction on the bidirectional serial channel.

Considered in more detail, the frame type 802 includes an upstream packet 820 and a downstream packet 822 for upstream and downstream data transfers, respectively, in a single frame. In this example, the frame type 802 has 68 RF UIs equally split between upstream and downstream. The upstream and downstream packets 820, 822 both have an upstream sync field 804, or downstream sync field 806 and an upstream payload field 806 or downstream payload field 808. In each case, the payload field has a 4-bit Table of Contents subfield, a 15-bit data subfield, and a 5-bit error correction subfield. There are no HS fields as in Fig. 7.

To support the latency requirements of HS USB, the HS data fields 712, 716 and associated error correction fields 714, 718 may be added to a frame, as in Fig. 7, if the device has started receiving HS data even if the corresponding HS data field 712, 716 cannot be filled. HS USB does not allow for underruns due to latency in the communication channel so HS USB packets end with a Bit Stuffing Error (BSE). The BSE may also be used with the HS fields of Fig. 7 to end HS transfers. In this way, after the BSE, the HS data is filled with more HS "J's." To fill the field and provide appropriate timing bits, initial HS "J's" may fill the HS data field until a valid HS SYNC symbol can be transferred. A full HS output is thereby maintained on the receiving device that receives the initial HS "J's."

As shown, the frame structure 802 of Fig. 8, like the first part of the frame structure 702 of Fig. 7 and the other frame structures 302, 502, 602 have a total length no greater than 82 UI. In the 960Mbps example, this meets the latency of the FS USB UI of being no greater than 83.33ns while still meeting the data rate of FS USB when FS USB is being carried.

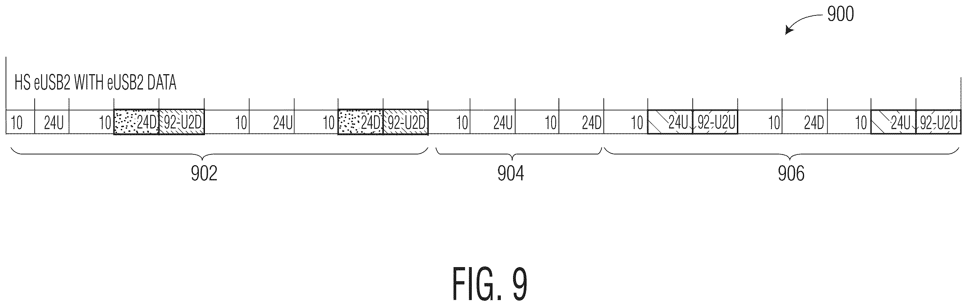

Fig. 9 is an alternate timing diagram of a sequence of frames that are duty-cycled to correspond to traffic demands. A first frame 902 of the sequence 900 includes the HS fields as shown in Fig. 7. A second frame 904 excludes the HS fields as shown in Fig. 8. A third frame 906 includes the HS fields again. As shown, in the third frame, the second part (92-U2U) is between the upstream packet (24U) and the downstream packet (24D). This repeats with another second part (92-U2U or 92-U2D) after another upstream packet (24U). The HS USB data of the second part (92-U2U) follows the upstream or downstream non-USB portion (24U or 24D) as appropriate. In some examples, a downstream non-USB packet (24D) starts a process of sending frames and is either followed by a downstream HS USB (92-U2D) portion or followed by switching to the upstream non-USB portion (24U) which could be followed by an upstream HS USB data portion (92-U2U) or by a return to a downstream non-USB packet (24D).

A system may be operated with a sequence of frames in which some frames include HS USB data and other frames do not include HS USB data so that HS USB data is flowing both downstream and upstream as traffic requires. When the HS USB data sources and sinks of a device are idle, additional non-USB data LS and FS USB data, and control information can transfer through the serial channel between the devices. Initial HS USB traffic may flow downstream and a response of ACK or requested data may flow upstream.

The examples above are presented in the context of a serial channel that operates at a data rate of 960 Mbps, however other data rates may be used instead of 960 Mbps with corresponding adjustments to the frames. 960 Mbps and 1080 Mbps are convenient frequencies for some systems because they are multiples of 120MHz, a clock frequency that is used in other parts of some integrated circuits. This allows the cost of the serial channel, modems, and other related equipment to be reduced by sharing clocking and other components. 1100 Mbps is also convenient as a multiple of a 5.5 Gbps High Power radio used for USB 3.2. Other data rates may alternatively be used. For a wireless serial channel, radio frequencies are selected that do not interfere with other important licensed and unlicensed radio uses. 960 GHz is very close to frequencies used for cellular radio communications. 1100 GHz is at the edge of some satellite navigation communication bands. 1080 GHz avoids cellular radio and satellite navigation but may interfere with other radio uses. When the serial channel uses a wired connection, then interference with radio signal may not be considered.

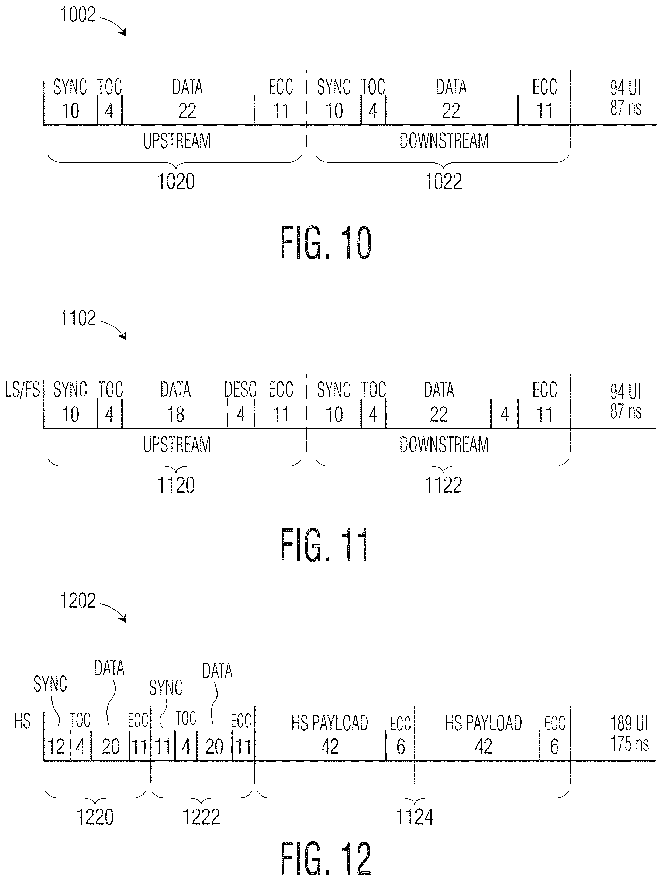

Fig. 10 is a diagram of an alternate frame type of serial data suitable for control and data other than USB data. The frame type 1002 is adapted for use with a 1080 Mbps data rate. The frame type 1002 includes an upstream packet 1020 and a downstream packet 1022 for upstream and downstream data transfers, respectively, in a single frame. In this example the frame type 1002 has 94 RF UI equally split between upstream and downstream. With a channel baud rate of 1080 Mbps, the frame type has a duration of 87ns. This is still no greater than and even less than the latency of two USB hubs.

The upstream packet 1020 and the downstream packet 1022 have the same or a similar structure with a 10-bit sync field, a 4-bit Table of Contents subfield, a 22-bit data subfield, and an 11-bit error correction subfield. The sync field and Table of Contents subfield are similar to those discussed above. The 22-bit data subfield considers the data rates that may be used for the control and other data. The error correction subfield is expanded in consideration of the faster data rate at 1080 Mbps.

Fig. 11 is a diagram of an alternate frame type 1102 suitable for control and non-HS USB data, i.e., Low Speed (LS) and Full Speed (FS) USB data may also be included in the frame. The frame type 1102 also has 94 RF UI to meet the same latency demands as with the frame type 1002 of Fig. 11. The frame type 1102 has an upstream packet 1120 and a corresponding downstream packet 1122. These are the same or similar to that of the non-USB frame type 1002 except that the data subfield has been reduced to 18 bits to accommodate a description subfield of 4 bits. As in the example of Fig. 5, the description subfield identifies the type of LS or FS USB data, if any.

Fig. 12 is a diagram of an alternate frame type suitable for control and data types other than USB types. It is also suitable for HS USB data using a dedicated HS eUSB slot. The frame type 1202 has an upstream packet 1120 and a downstream packet 1122 in the first part. A second part 1124 is configured for HS USB data. The frame type has 189 UI and a total length of 175ns. The second part is configured to carry a number of bits of high-speed USB data corresponding approximately to the data rate of high-speed USB for the whole frame.

As shown, the second part has two packets, each with a 42-bit subfield and 6-bit error correction subfield. The first part has an upstream packet with an 11-bit sync field, a 4-bit Table of Contents subfield, a 20-bit data field, and an 11-bit error correction field. This is similar to the upstream packet 1020 of Fig. 10, however, the sync field is expanded to adjust the length of the first part to match the second part 1124. The downstream is different in that it has an 11-bit sync field. Alternatively, the upstream packet 1120 may have the 11-bit synch field instead of the downstream packet 1122.

The examples of Figs. 10, 11, and 12 are provided to show how the basic principles and structures described herein may be adapted to suit different data rates, different USB data rates and different serial channels, whether wired or wireless, to provide robust and reliable data flow across the serial channel to a variety of different sinks and sources.

Although the configurations of the structures herein are shown and described in a particular order, the order of the structures of each example may be altered and additional component may be added to add additional operations or functionality that may be performed in addition to the operations and functions described herein.

Embodiments of the invention may be implemented entirely in analog hardware, digital hardware, a combination of analog and digital hardware, or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A serial link modem comprising:
a transmit modem coupled to a serial channel and configured to send serial data through the serial channel; and
an aggregator coupled to the transmit modem and configured to form
a first frame type of serial data configured for data other than Universal Serial Bus (USB) data having an upstream packet and a downstream packet and a total length no greater than a latency of two USB hubs, the upstream packet having a payload field configured to carry a data subfield and a table of contents subfield to identify a payload of the data subfield, and
a second frame type of serial data configured for USB data,
wherein the aggregator forms the second frame type upon receiving USB data; and
wherein the transmit modem is configured to transmit the first frame type through the serial channel, and to transmit the second frame type through the serial channel upon completion of transmitting the first frame.

2. The serial link modem of claim 1, wherein the second frame type has a total length no greater than a full speed USB unit interval.

3. The serial link modem of claim 1 or 2, wherein upon receiving data other than USB data during transmitting the second frame type, the aggregator is configured to buffer the data other than USB data until after transmitting the second frame type.

4. The serial link modem of any of claims 1 to 3, wherein the table of contents subfield indicates the payload as a type of data or control.

5. The serial link modem of any of claims 1 to 4, wherein the upstream packet comprises a synchronization field having a wait timing recovery of two bits and a data recovery of eight bits.

6. The serial link modem of any of claims 1 to 5, wherein the downstream packet comprises a synchronization field and a payload field configured to carry a data subfield and a table of contents subfield to identify a payload of the data subfield.

7. A serial link modem of any of claims 1 to 6,
wherein the second frame type is configured for full speed USB data and data other than USB data having an upstream packet and a downstream packet,
wherein the aggregator is configured to form a third frame type configured for high speed USB data and data other than USB data having a first part having an upstream packet and a downstream packet and a total length no greater than the latency of the two USB hubs and a second part having at least one packet to carry high speed USB data, the second part having a total length no greater than the latency of the two USB hubs, and
wherein the transmit modem is configured to transmit the third frame type through the serial channel.

8. The serial link modem of claim 7, wherein the second part at least one packet carries a number of bits of high speed USB data corresponding approximately to the total length of the second part at a high speed USB data rate.

9. The serial link modem of claim 7 or 8, wherein the data rate of the second part at least one packet corresponds to a high speed USB data rate.

10. The serial link modem of any of claims 7 to 9, wherein the second part at least one packet has a high speed data field with a capacity corresponding to 480Mbps as the third frame type is transmitted through the serial channel.

11. The serial link modem of any of claims 7 to 10, wherein the second part of the third frame type comprises two high speed USB fields, each associated with an error correction field.

12. The serial link modem of claim 11, wherein the third frame type second part comprises an error correction code field configured to correct errors of the high speed USB data.

13. The serial link modem of any of claims 1 to 12, wherein the latency of two USB hubs is no greater than 176ns.

14. A method comprising:
sending a first frame type by a transmit modem coupled to a serial channel, the first frame type configured for data other than Universal Serial Bus (USB) data having an upstream packet and a downstream packet and a total length no greater than a latency of two USB hubs, the upstream packet having a payload field configured to carry a data subfield and a table of contents subfield to identify a payload of the data subfield, and
sending a second frame type by the transmit modem in response to receiving USB data, the second frame type configured for USB data.

15. The method of claim 14, wherein the table of contents subfield indicates the payload as a type of data or control and wherein the upstream packet comprises a synchronization field having a wait timing recovery of two bits and a data recovery of eight bits.
